(19) Europäisches Patentamt / European Patent Office / Office européen des brevets

(11) EP 2 911 860 B1

(12) **FASCICULE DE BREVET EUROPEEN**

(45) Date de publication et mention de la délivrance du brevet:
**19.10.2016 Bulletin 2016/42**

(21) Numéro de dépôt: **13789876.3**

(22) Date de dépôt: **23.10.2013**

(51) Int Cl.:
**B29C 49/18** (2006.01)    **B29L 31/00** (2006.01)
**B29D 22/00** (2006.01)

(86) Numéro de dépôt international:
**PCT/FR2013/052537**

(87) Numéro de publication internationale:
**WO 2014/068223 (08.05.2014 Gazette 2014/19)**

(54) **PROCEDE DE SOUFFLAGE DE RECIPIENTS, ET MACHINE POUR CE PROCEDE**

VERFAHREN ZUR BLASFORMUNG VON BEHÄLTERN UND MASCHINE ZUR DURCHFÜHRUNG DIESES VERFAHRENS

METHOD FOR BLOW-MOULDING CONTAINERS, AND MACHINE FOR SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2012 FR 1260281**

(43) Date de publication de la demande:
**02.09.2015 Bulletin 2015/36**

(73) Titulaire: **Sidel Participations**
**76930 Octeville sur Mer (FR)**

(72) Inventeur: **LEMBLE, Thierry**
**F-76930 Octeville-sur-Mer (FR)**

(74) Mandataire: **Siloret, Patrick et al**
**Sidel Blowing & Services**
**Avenue de la Patrouille de France**
**76930 Octeville-sur-Mer (FR)**

(56) Documents cités:
EP-A1- 1 777 056    EP-A1- 1 922 206
EP-A1- 2 014 443    EP-A2- 1 905 569

## Description

DOMAINE DE L'INVENTION :

L'invention concerne le domaine des procédés de fabrication de récipients par soufflage ou étirage-soufflage.

Au cours de tels procédés, une préforme ou un récipient intermédiaire en matériau synthétique tels que du PET est porté à une température au-dessus de la température de transition vitreuse du matériau, puis inséré dans une unité de moulage. De l'air sous haute pression -de l'ordre de 40 bars- est inséré dans la préforme ou le récipient intermédiaire dont la paroi se dilate jusqu'à être plaquée contre le moule pour être mis en forme. Puis, on baisse la pression dans le récipient pour ouvrir l'unité de moulage et évacuer le récipient à la pression atmosphérique.

L'invention concerne en particulier les procédés où la montée en pression se fait par paliers en raccordant le récipient en cours de fabrication, d'abord à un premier réseau d'air à une pression intermédiaire, puis à un deuxième réseau d'air à une pression plus élevée, et ainsi de suite. Cela permet d'utiliser des sources d'air à pression intermédiaires moins chères plutôt que de recourir exclusivement à une source d'air à pression maximum. De plus, la baisse de pression peut se faire par paliers. Cela permet à l'air du récipient comprimé à la pression élevée de se vider dans le réseau à pression intermédiaire et permet de récupérer une partie de l'énergie.

L'inconvénient des procédés à paliers de pression est que la montée et la chute de pression dans le récipient sont moins rapides. Pour une même cadence de moulage, cela réduit la durée de plaquage à haute pression du récipient contre les parois du moule. Cela rend plus difficile l'obtention de petits détails de forme dans le récipient.

Il en résulte que pour réduire cet impact négatif il est nécessaire d'optimiser les réglages du déroulement du procédé et de chacun de ses paliers, ce qui complique singulièrement la tâche de l'opérateur de production par rapport à un procédé classique.

De plus, au cours de la production, ou à l'occasion d'un changement du type de produit, les équilibres physiques peuvent évoluer en fonction de paramètres de l'ambiance, ou de paramètres liés à la préforme, ou à la bouteille, ce qui implique des réajustements du procédé pour demeurer optimum.

ETAT DE LA TECHNIQUE :

Le technicien est aujourd'hui astreint à observer une courbe de pression d'un article en cours de formation, ses différentes phases successives de montée en pression, ses différentes phases successives de dépressurisation, et de se livrer à une interprétation lui permettant de raccourcir ou allonger temporellement chacune des phases sans compromettre l'efficacité industrielle. Il devra encore vérifier sur les autres unités de formage de la machine que son intervention est compatible avec les dispersions éventuelles.

Un procédé apparenté est décrit dans le document EP-A-1905569.

OBJET ET DESCRIPTION GENERALE DE L'INVENTION :

L'invention vise notamment à remédier à ces inconvénients, en proposant un procédé permettant d'améliorer la qualité des récipients produits, tout en maintenant - voire en augmentant - les cadences de production et optimisant les économies d'énergie.

Selon un mode de réalisation le procédé de fabrication de récipients thermoplastiques par étirage-soufflage est constitué de manière connue d'une succession de cycles de fabrication au cours de chacun desquels un nouveau récipient est fabriqué, chaque cycle de fabrication comprenant une phase de pré-soufflage où l'on raccorde une préforme à un réseau (S0) d'air de pré-soufflage de sorte que la préforme devient un récipient prêt à être soufflé lors d'une phase de soufflage global qui comprend successivement au moins les sous-phases suivante :

un soufflage ou une succession de soufflages où l'on raccorde le récipient à successivement des réseaux (S1, S2) d'air de pression de plus en plus élevées, puis une récupération ou une succession de récupérations où on raccorde le récipient à successivement des réseaux (R1) d'air de récupération de pression de moins en moins élevées, jusqu'à la dernière récupération où le récipient est raccordé à un réseau (R2) d'air, puis un dégazage où on raccorde le récipient à la pression atmosphérique,

et enfin, l'ouverture du moule comprenant la déconnexion de la tuyère.

Selon l'invention, on sélectionne au moins un point caractéristique de la pression (Prt) dans le récipient, c'est-à-dire un point de la courbe des pressions mesurées dans le récipient. Ledit point caractéristique est pris parmi les points sélectionnables que sont, s'il y a plusieurs soufflages, la transition (E) entre deux soufflages successifs ; s'il y a plusieurs récupérations, la transition (G) entre deux récupérations successives et la transition (H) entre la dernière récupération et le dégazage ; pour chaque point sélectionné, on détermine un critère ($|\Delta P|$, $|P'|$) de déclenchement, et une valeur prédéterminée du critère, au cours d'un cycle de fabrication et d'acquisition de données, on mesure la pression (Prt) dans le récipient, pour chaque point sélectionné, on détermine à partir des courbes de pressions mesurées :

- l'instant effectif (te, tg, th) correspondant audit point sélectionné (E, G, H),
- la valeur effective du critère au point sélectionné, et
- un instant de consigne pour déclencher dans un cycle de fabrication ultérieur le passage à la sous-phase postérieure au point caractéristique, tel que :

si la valeur effective du critère est inférieure ou égale à la valeur prédéterminée, l'instant de consigne est l'instant pour lequel le critère a pris une valeur égale à la valeur prédéterminée, et si la valeur effective du critère est strictement supérieure à la valeur prédéterminée, l'instant de consigne est postérieur à l'instant effectif et est déterminé de manière qu'à cet instant le critère prenne une valeur se rapprochant de ou coïncidant avec la valeur prédéterminée.

Dans une variante, pour au moins un point caractéristique sélectionné, le critère de déclenchement est la valeur absolue de la différence de pression entre le récipient et le réseau d'air auquel est raccordé le récipient lors de la sous-phase immédiatement avant le point caractéristique, le procédé comprend une étape de mesure au cours du cycle de fabrication et d'acquisition de données de la pression dans le réseau d'air auquel est raccordé le récipient avant le point caractéristique sélectionné.

Dans une autre variante, pour au moins un point caractéristique sélectionné, le critère de déclenchement est la valeur absolue de la pente de la pression dans le récipient.

Dans encore une autre variante, on détermine un incrément temporel adapté au point caractéristique sélectionné et au critère déterminé et dans lequel, si la valeur effective du critère au point caractéristique sélectionné est supérieure à la valeur prédéterminée, l'instant de consigne pour le cycle suivant est égal à l'instant effectif pour le cycle venant d'être mesuré, augmenté de l'incrément.

Dans une variante, si la valeur effective du critère au point caractéristique sélectionné est supérieure à la valeur prédéterminée, on simule le critère postérieurement à l'instant effectif et dans lequel l'instant de consigne pour le cycle suivant est égal à l'instant pour lequel le critère simulé prend une valeur égale à la valeur prédéterminée.

Selon un mode particulier de réalisation, on détermine un seuil prédéterminé de pression de fin de dégazage et on détermine à partir des courbes de pressions mesurées un instant ($t_f$) effectif de fin de soufflage (F) et la pression dans le récipient juste avant l'ouverture du moule, et dans lequel on détermine un instant ($t'_f$) consigne de fin de soufflage pour un cycle de fabrication ultérieur, lequel instant ($t'_f$) de consigne est antérieur, égal ou postérieur à l'instant ($t_f$) effectif de fin de soufflage selon que la pression dans le récipient juste avant l'ouverture du moule est respectivement supérieure, égale ou inférieure au seuil de pression de fin de dégazage.

Avantageusement, si la pression moyenne dans le récipient dans une période de temps prédéterminée avant l'ouverture du moule est inférieure au seuil de pression de fin de dégazage, on détermine un instant ($t_k$) cible de fin de dégazage pour lequel la pression mesurée dans le récipient est égale au seuil prédéterminé, et dans lequel l'instant ($t'_f$) consigne de fin de soufflage (F') pour le cycle de fabrication ultérieur est postérieur à l'instant ($t_f$) effectif de fin de soufflage d'une durée égale à la durée s'écoulant depuis l'instant ($t_k$) cible de dégazage jusqu'à l'instant ($t_L$) d'ouverture effective du moule.

Avantageusement, si la pression moyenne dans le récipient dans une période de temps prédéterminée avant l'ouverture du moule est supérieure au seuil de pression de dégazage, l'instant ($t'_f$) consigne de fin de soufflage pour un cycle de fabrication ultérieur est déterminé,

soit en retirant à l'instant ($t_f$) effectif de fin de soufflage une durée prédéterminé,

soit en simulant la pression dans le récipient comme si il n'y avait pas eu d'ouverture de moule, en déterminant un instant cible de fin de dégazage pour lequel la pression simulée est égale au seuil de pression de dégazage, l'instant consigne de fin de soufflage est alors antérieur à l'instant effectif de fin de soufflage d'une durée égale à la durée s'écoulant depuis l'instant d'ouverture effective de moule jusqu'à l'instant cible de dégazage.

Avantageusement on détermine une position initiale de début de première récupération et on utilise un seul soufflage à partir du réseau (S2) d'air de pression la plus élevée,

- puis, quand la pression moyenne dans le réseau (R1) de récupération atteint un seuil prédéterminé, on détermine une position initiale de transition entre l'avant dernier soufflage et le dernier soufflage,
- puis, on sélectionne les points (E, G) de début de dernier soufflage et de fin de première récupération, et on optimise ces deux points dans un cycle de fabrication ultérieur de la manière précitée,
- puis, on sélectionne le point (H) de dernière récupération que l'on optimise de même dans un cycle de fabrication encore ultérieur,
- puis, on détermine un instant de fin de dernier soufflage.

Avantageusement, après l'optimisation de la paire de points de début de dernier soufflage et de fin de première récupération et avant l'optimisation du point de début de dernière récupération, on optimise les éventuelles paires de points intermédiaire de soufflage intermédiaire et de récupération correspondante.

Avantageusement, le procédé utilise un carrousel équipé d'une pluralité de stations d'étirage-soufflage, raccordés chacune aux différents réseaux (S0, S1, S2, R1, R2) d'air, une partie ou la totalité desdites stations étant des stations de référence. Pour chaque récipient des stations de référence et pour chaque point sélectionné, on mesure la pression $\left(\mathrm{Pr}_t^i\right)$ dans le récipient de chacune des stations de référence, et on détermine un instant de consigne correspondant. Pour chaque point sélectionné on analyse la distribution desdits instant de consigne et on détermine, soit un message d'alerte, soit un message de stabilité, soit un instant moyen de consigne pour le point sélectionné. Si un instant moyen de consigne est déterminé, on applique ledit instant moyen de consigne dans toutes les stations d'étirage-soufflage, à partir d'un cycle de fabrication ultérieur.

Avantageusement, pour passer d'une sous-phase de la phase de soufflage globale précédant un point caractéristique (E, F, G, H) de pression (Prt), à une sous-phase suivant ledit point caractéristique :

- on commande la fermeture d'une vanne de raccordement correspondant à la sous-phase qui précède ledit point caractéristique, et
- on commande l'ouverture de la vanne de raccordement correspondant à la sous-phase qui suit le point caractéristique.

Avantageusement, les consignes temporelles d'actionnement des vannes de raccordement du récipient sont déterminées en tenant compte du temps de réponse desdites vannes pour que la fermeture effective de la vanne à fermer soit antérieure ou coïncide avec l'instant (te) d'ouverture effective de la vanne à ouvrir.

Avantageusement, pour déterminer un point caractéristique (E, F, G, H) de la pression (Prt) dans le récipient en fonction du temps :

- on applique un filtre numérique à la courbe de pression (Prt) dans le récipient,
- on détermine une zone temporelle (ze, zf, zg, zh) d'exploration de la courbe où le point caractéristique à déterminer est susceptible de se trouver,
- on détecte un point anguleux de la courbe dans la zone d'exploration.

Selon un mode particulier de réalisation, on prédétermine un seuil de pression de dégazage, un instant ($t_a$) effectif de début de pré-soufflage (A), un instant ($t_L$) effectif d'ouverture de moule, et un instant ($t_k$) cible de fin de dégazage, tel que la pression effective ou simulée comme si il n'y avait pas eu d'ouverture de moule, est égale au seuil de pression de fin de dégazage, et dans lequel on détermine une consigne de cadence pour le cycle de fabrication ultérieur égale à la cadence du cycle venant d'être mesuré, multipliée par la durée entre l'instant ($t_a$) de début de pré-soufflage et l'instant ($t_L$) d'ouverture du moule, divisée par la durée entre l'instant ($t_a$) de début de pré-soufflage et l'instant ($t_k$) cible de fin de dégazage.

BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :

- La figure 1 est un schéma illustrant une installation de moulage pour la fabrication de récipient selon le procédé.
- La figure 2 est un relevé de pression d'air dans le récipient,
- La figure 3 illustre un premier mode de réalisation du procédé,
- La figure 4 illustre un deuxième mode de réalisation du procédé,
- La figure 5 illustre un troisième mode de réalisation du procédé,
- La figure 6 illustre un quatrième mode de réalisation du procédé, et
- La figure 7 illustre un cinquième mode de réalisation du procédé.

DESCRIPTION DETAILLEE :

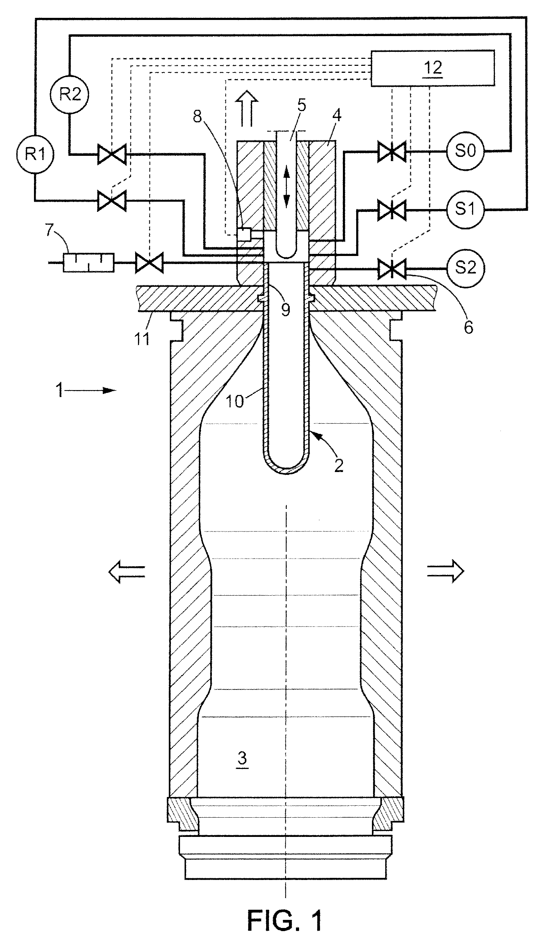

Comme illustré en figure 1, une unité **1** de moulage pour étirage-soufflage d'une préforme **2** thermoplastique comprend un moule formant une cavité **3** de moulage en deux parties pouvant s'écarter pour libérer le récipient produit. L'unité 1 de moulage comprend en outre une tuyère **4** de soufflage équipée d'une tige **5** d'élongation mobile verticalement. La tuyère 4 de soufflage est raccordée par des vannes **6** à un réseau **S0** d'air de présoufflage, un réseau **S1** de soufflage à pression intermédiaire, un réseau **S2** d'air de soufflage à pression maximum, un réseau **R1** de récupération intermédiaire et un réseau **R2** de dernière récupération. La tuyère 4 de soufflage est également raccordée à la pression atmosphérique via un silencieux **7** et comprend un capteur **8** de pression.

La préforme 2 comprend un col **9** et un corps **10** qui est préchauffé avant d'être introduit dans la cavité 3 par un moyen **11** de retenue. Lors de l'étirage-soufflage, la cavité 3 est fermée autour du corps 10, la tuyère 4 de soufflage s'accouple sur le col 9 et le capteur 8 peut alors mesurer la pression dans le corps 10.

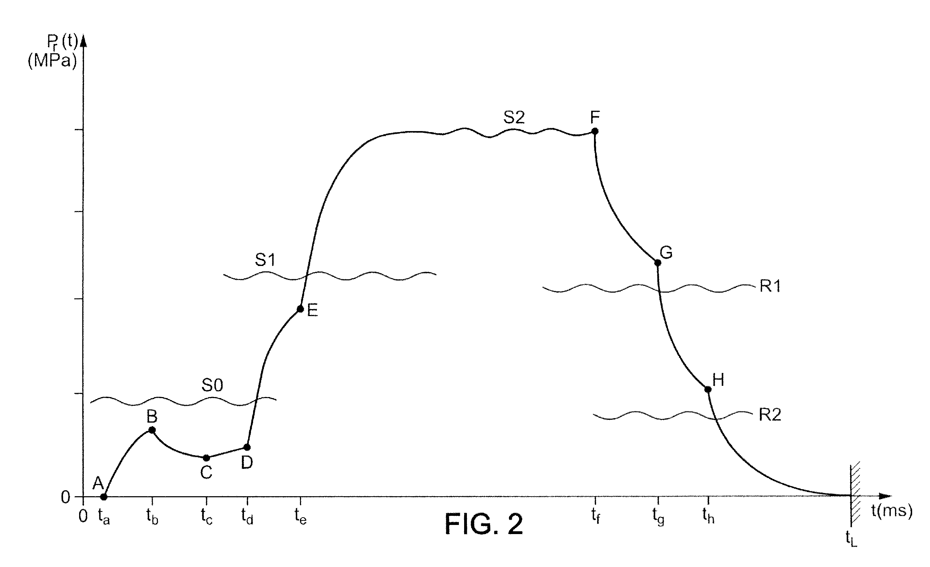

A l'instant $t_a$ indiqué sur la figure 2, la vanne du réseau S0 de présoufflage est ouverte. Le corps 9 préchauffé commence à se dilater et la pression **Pr(t)** dans le corps 10 augmente comme si la pression dans le récipient allait s'équilibrer avec la pression du réseau S0. A un instant $t_b$, la tige 5 d'élongation descend dans le corps 10 pour l'étirer axialement. Cela affine la paroi du corps 10 et augmente rapidement le volume intérieur du corps 10. La pression d'air descend alors temporairement jusqu'à ce que le corps ait la longueur de la cavité 3, comme indiqué par le point C de la figure 2. Puis, l'air du réseau S0 continue de s'écouler dans le corps 10 et la pression remonte à nouveau.

Puis vient la phase de soufflage global qui permet de transformer la préforme 2 en récipient. Cette phase de soufflage comprend les sous-phases suivante :

- la vanne du réseau S0 de présoufflage est fermée à l'instant $t_d$ et la vanne du premier réseau S1 de soufflage est ouverte. Les vannes sont commandées par une unité **12** de commande. L'air du réseau S1 s'écoule dans le récipient via la tuyère 4 de soufflage et la pression Pr(t) dans le récipient augmente comme si celle-ci allait s'équilibrer avec la pression sensiblement stable du réseau S1 de soufflage intermédiaire.
- A l'instant $t_e$, avant que la pression Pr(t) du récipient ait atteint celle du réseau S1, la vanne du réseau S1 est fermée et la vanne du réseau S2 de soufflage maximum est ouverte. La pression du réseau de soufflage maximum peut être d'environ 40 bars. L'écoulement d'air dans le récipient se fait alors plus rapide et le déclenchement du soufflage maximum se traduit par un point d'inflexion en E sur la courbe Pr(t).

L'écoulement d'air du réseau S2 se poursuit jusqu'à ce que la pression Pr(t) dans le récipient s'équilibre avec la pression dans le réseau S2. Sous cette pression, le corps continue de se dilater jusqu'à être plaqué contre la paroi de la cavité 3. Le maintien de la pression maximum permet au récipient ainsi fabriqué d'épouser tous les détails de forme imposés par la cavité 3. Bien que le récipient soit terminé au point F, on ne peut pas ouvrir le moule directement pour récupérer le récipient car l'air y est encore à 40 bars. Il faut baisser la pression dans le récipient avant d'ouvrir le moule.

- A l'instant $t_f$ l'unité 12 de commande ferme la vanne du réseau S2 et ouvre celle du premier réseau R1 de récupération. L'air s'écoule alors du récipient vers le réseau R1 et la courbe Pr(t) de pression a l'allure caractéristique d'un écoulement d'air entre deux réservoirs de pressions différentes en vue d'équilibrer leurs pressions. Cet écoulement intermédiaire permet de récupérer une partie de l'énergie de compression contenue dans le volume d'air à 40 bars du récipient. L'air du réseau R1 pourra, après filtrage, alimenter le réseau S1 de soufflage intermédiaire.
- A l'instant tg, l'unité 12 de commande ferme la vanne du réseau R1 et ouvre celle du réseau R2. L'enclenchement de cette deuxième récupération a lieu avant que la pression dans le récipient ait atteint la pression du réseau R1. Cela permet d'accélérer la baisse de la pression Pr(t) dans le récipient. Après filtrage, l'air récupéré dans le réseau R2 pourra alimenter le réseau S0 de présoufflage.
- De manière similaire, à l'instant $t_h$, la vanne de R2 est fermée et celle du silencieux 7 est ouverte.
- Enfin, à l'instant $t_L$, déterminé par la cadence de la machine d'étirage-soufflage, le moule s'ouvre. C'est-à-dire que la tuyère 4 de soufflage se relève et la cavité 3 s'écarte pour libérer le récipient terminé.

Autrement dit, le cycle de fabrication comprend un étage S0-R2 de présoufflage et de dernière récupération et un étage intermédiaire S1-R1. On comprend que le cycle de récupération peut comprendre plusieurs étages intermédiaires successifs, et que le cycle de soufflage peut comprendre plusieurs paliers de soufflage.

L'objet de l'invention est d'optimiser la courbe Pr(t) pour maximiser l'efficacité du soufflage. On peut par exemple augmenter la proportion du temps où la pression est maintenue à 40 bars dans le récipient.

On comprend qu'une source importante d'optimisation est de ne pas attendre trop longtemps que la pression d'air du récipient se stabilise avec les réseaux intermédiaires S0, R1, R2. Pour autant, une anticipation excessive des changements de sous-phases dégraderait la récupération d'énergie.

L'invention propose d'analyser si les instants de basculement entre sous-phases sont optimums en fonction d'un critère prédéterminé, puis de modifier la consigne de changement de sous-phases pour des cycles de production ultérieurs.

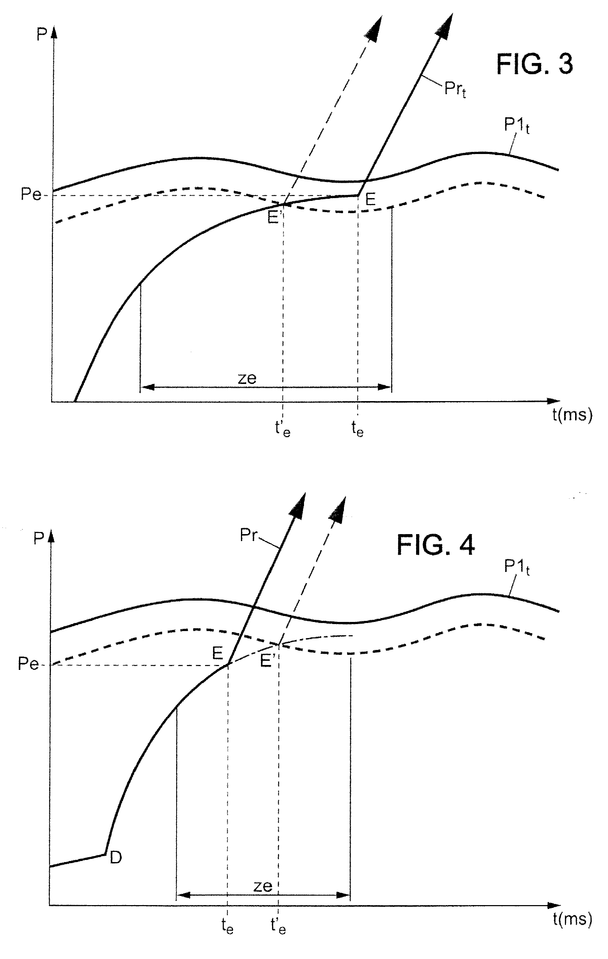

Comme illustré aux figures 3 et 4, un premier critère d'optimisation peut être une différence de pression entre le récipient et le réseau auquel ce récipient est connecté. Par exemple, pour un étage de récupération intermédiaire (S1-R1) aux environs de 20 bars, quand la pression dans le récipient s'approche de 0,5 bar de la pression du réseau auquel ce récipient est raccordé, on considère que l'écoulement d'air entre les deux est trop lent et qu'il est préférable de déclencher le basculement vers la sous-phase suivante.

Au cours d'un cycle de fabrication, un calculateur enregistre en fonction du temps la pression Pr(t) dans le récipient et la pression dans le réseau S1 intermédiaire de soufflage et dans les réseaux R1, R2 intermédiaires de récupération. A la fin du cycle d'acquisition de données, on analyse les courbes.

Une zone **Ze** d'exploration a été prédéterminée autour des points de commande d'ouverture et de fermeture des vannes, de manière que le point E de déclenchement de la deuxième sous-phase de soufflage soit susceptible de s'y trouver. Par filtrage numérique et/ou analyse des dérivés de la courbe Pr(t), un calculateur détermine l'instant $t_e$ où a lieu le déclenchement. Le calculateur en déduit la valeur effective de la pression Pr($t_e$) dans le récipient et la pression P1($t_e$) dans le premier réseau S1 de soufflage.

Si, comme illustré en figure 3, P1($t_e$) - Pr($t_e$) est inférieur à la différence prédéterminée (0,5 bar), le calculateur explore les instants antérieurs jusqu'à ce qu'il trouve un instant $t'_e$ pour lequel le critère P1($t'_e$) - Pr($t'_e$) est égal à 0,5 bar. Cet instant $t'_e$ est alors un instant de consigne pour déclencher la sous-phase suivante lors d'un cycle de fabrication ultérieur.

Si, comme illustré en figure 4, P1(t$_e$) - Pr(t$_e$) est supérieur à la différence prédéterminée, telle que 0,5 bar, alors le calculateur simule la prolongation de la courbe de pression dans le récipient comme s'il n'y avait pas eu de déclenchement de la sous-phase suivante. Dans cette portion simulée de courbe, illustrée en pointillés sur la figure 4, le calculateur déduit un instant t'$_e$ pour lequel le critère P1(t'$_e$) - Pr(t'$_e$) est égal à la différence prédéterminée. L'instant t'$_e$ ainsi déterminé sert de consigne pour déclencher la sous-phase suivante lors d'un cycle de fabrication ultérieur.

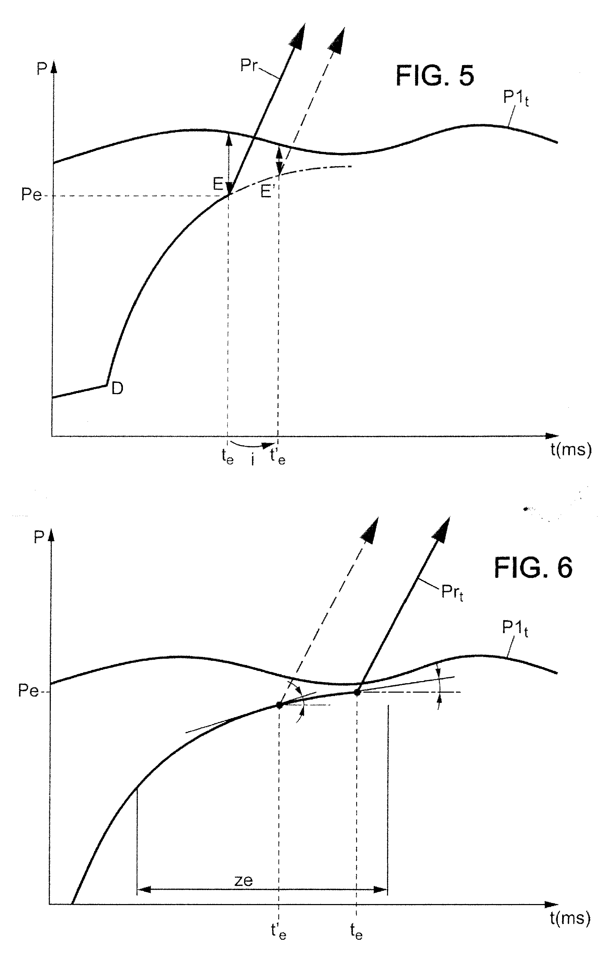

Dans une variante illustrée en figure 5, si à l'instant t$_e$ effectif de changement de sous-phase, le critère P1(t$_e$) - Pr(t$_e$) est supérieur à la différence prédéterminée telle que 0,5 bar, au lieu de calculer une courbe simulée, l'instant de consigne est simplement incrémenté d'une valeur "i" prédéterminée. Ainsi, la détermination de l'instant de consigne est très rapide même s'il ne permet que de s'approcher de la valeur optimale. A la fin du cycle ultérieur dans lequel la consigne est appliquée, il sera possible d'analyser de nouveau les mesures de pressions effectuées pour savoir si on se trouve dans la configuration décrite avec la figure 3 ou si un autre incrément est nécessaire comme dans la figure 5.

On comprend que le critère de la différence de pressions est transposable pour optimiser les points G et H de la figure 2.

Après avoir déterminé le ou les instants t$_g$, t$_h$ effectifs de changement de sous-phase, le calculateur mesure la valeur absolue de la différence de pressions entre le récipient et le réseau auquel le récipient est connecté avant ce changement. Si cette différence est inférieure à une valeur prédéterminée pour ce critère, telle que 0,5 bar, on détermine un instant de consigne t'$_g$ ou t'$_h$ pour déclencher le changement de sous-phase lors d'un cycle de fabrication ultérieur. On procède comme en figure 3 par exploration de la valeur de ce critère avant l'instant effectif, ou comme en figure 4 par simulation d'une courbe prolongée, ou comme en figure 5 par ajout d'un incrément.

Comme illustré en figure 6, un autre critère de changement de sous-phase peut être utilisé. Si à l'instant t$_e$ effectif de changement de sous-phase, la pente

$$\left| P' \right| = \left| \frac{d\,\mathrm{Pr}}{dt}(t_e) \right|$$

de la pression Pr(t) dans le récipient est inférieure à une valeur prédéterminée, c'est que le passage à la sous-phase suivante a été trop tardif. Le calculateur détermine alors un instant t'$_e$ antérieur pour

lequel le critère $\left| \frac{d\,\mathrm{Pr}}{dt}(t'_e) \right|$ est égal à la pente prédéterminée. Ce critère présente l'avantage d'utiliser le calcul de la dérivée effectué pour déterminer l'instant effectif t$_e$. De plus, cela évite de mesurer la pression dans le réseau d'air concerné. Cela évite d'avoir à filtrer ces mesures. La pente de la courbe de pression dans le récipient est directement représentative de la différence de pression moyenne à l'instant considéré.

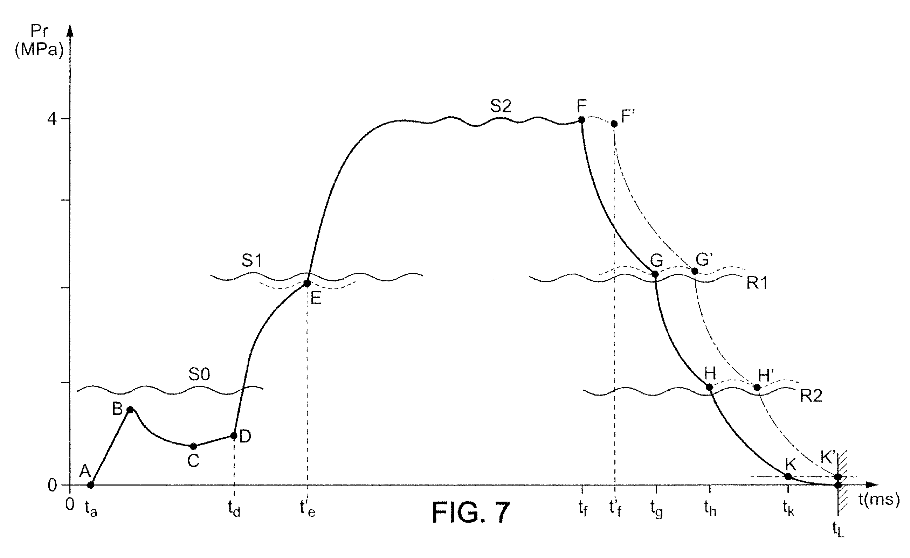

La figure 7 illustre une étape ultérieure du procédé. On considère qu'au cours d'un certain nombre de cycles antérieurs de fabrication, les points E, G, H de changement de sous-phase de soufflage et de récupération ont déjà été optimisés et qu'il a été constaté que le processus est relativement stable d'un cycle à l'autre. L'objet de cette étape du procédé est, soit d'optimiser la durée du palier à pression maximum, soit d'optimiser la cadence de la machine d'étirage-soufflage. Une combinaison de ces deux optimisations est également possible.

L'optimisation possible vient du fait qu'il existe un seuil de pression de fin de dégazage, faible, par exemple de l'ordre de 0,5 bar pour lequel on peut ouvrir le moule et retirer la tuyère 4 de soufflage sans risquer de dégrader le mécanisme d'étanchéité de la tuyère 4 de soufflage et sans provoquer de bruit excessif. Dès lors, si comme illustré en figure 7, la pression dans le récipient atteint ce seuil de fin de dégazage avant l'ouverture du moule, c'est que du temps est perdu. Ce temps inutile peut être reporté dans le palier à pression maximum et/ou permet d'accélérer la cadence de fabrication.

Le calculateur détermine la pression moyenne effective dans le récipient dans une période de temps précédant l'ouverture du moule. Cette période de temps est prédéterminée de manière à être courte par rapport à la durée du dégazage et plus longue que la phase transitoire de chute de pression dans un récipient qui contiendrait encore une pression de un ou quelque bars lors de l'ouverture du moule. Si cette pression effective moyenne est inférieure au seuil de pression de fin de dégazage, le calculateur explore la courbe Pr(t) et détermine un instant t$_k$ pour lequel Pr(t$_k$) est égal audit seuil Cet instant t$_k$ est dit instant cible de fin de dégazage.

Si la pression effective moyenne dans la période de temps prédéterminée avant l'ouverture du moule est supérieure au seuil de pression de fin de dégazage, le calculateur calcule la dérivée première et éventuellement seconde de la courbe Pr(t) dans ladite période, et calcule une courbe simulée de pression dans le récipient après l'ouverture du moule comme si l'ouverture n'avait pas eu lieu. Le calculateur détermine alors un instant t$_k$ cible de fin de dégazage pour lequel la pression simulée serait égale au seuil de pression de fin de dégazage. Cet instant cible de dégazage est alors postérieur à l'ouverture effective du moule.

Pour optimiser le palier à pression maximum, le calculateur détermine l'instant t$_f$ de fin de soufflage, c'est-à-dire l'instant de début effectif de la première récupération. Il détermine également l'instant t$_L$ d'ouverture du moule.

Si l'instant t$_k$ cible de fin de dégazage qui a été déterminé est antérieur à l'instant t$_L$ d'ouverture effective du moule, alors l'instant t'$_f$ de fin de soufflage est postérieur à l'instant t'$_f$ effectif de fin de soufflage d'une durée égale à la durée s'écoulant depuis l'instant t$_k$ cible de fin

de dégazage jusqu'à l'instant $t_L$ d'ouverture effective du moule. Dans le cycle ultérieur où cette consigne de fin de soufflage est appliquée, les points caractéristiques F, G, H et K seront translatés de cette durée et deviendront F', G', H' et K' illustrés en pointillés. Ainsi l'instant K' et l'ouverture du moule seront simultanés.

Si l'instant $t_k$ cible de fin de dégazage est postérieur à l'instant $t_L$ d'ouverture effective du moule, alors l'instant $t'_f$ de consigne de fin de soufflage est antérieur à l'instant $t_f$ effectif de fin de soufflage, d'une durée égale à la durée s'écoulant depuis l'ouverture du moule jusqu'à l'instant $t_k$ cible simulé de fin de dégazage.

Dans une variante, l'instant $t'_f$ de consigne de fin de soufflage peut être obtenu en retirant à l'instant $t_f$ effectif de fin de soufflage une durée prédéterminée.

Enfin, pour optimiser la cadence de fabrication, le calculateur détermine l'instant $t_a$ de début de présoufflage et l'instant $t_L$ effectif d'ouverture du moule. La cadence de consigne pour un cycle de fabrication ultérieur est égale à la cadence au cours du cycle actuel multipliée par la durée entre l'instant $t_a$ de début de présoufflage et l'instant $t_e$ d'ouverture du moule, divisée par la durée entre l'instant $t_a$ de début de présoufflage et l'instant $t_k$ cible de fin de dégazage.

## Revendications

1. Procédé de fabrication de récipients thermoplastiques par étirage-soufflage constitué d'une succession de cycles de fabrication au cours de chacun desquels un nouveau récipient est fabriqué, chaque cycle de fabrication comprenant une phase de présoufflage où l'on raccorde une préforme à un réseau (S0) d'air de pré-soufflage de sorte que la préforme devient un récipient prêt à être soufflé lors d'une phase de soufflage global qui comprend successivement au moins les sous-phases suivantes :

    un soufflage ou une succession de soufflages où l'on raccorde le récipient à successivement des réseaux (S1, S2) d'air de pression de plus en plus élevées,

    puis une récupération ou une succession de récupérations où on raccorde le récipient à successivement des réseaux (R1) d'air de récupération de pression de moins en moins élevées, jusqu'à la dernière récupération où le récipient est raccordé à un réseau (R2) d'air,
    puis un dégazage où on raccorde le récipient à la pression atmosphérique,
    et enfin une ouverture du moule comprenant la déconnexion de la tuyère,
    **caractérisé en ce qu'on** sélectionne au moins un point caractéristique de la pression ($Pr_t$) dans le récipient pris parmi les points sélectionnables que sont, s'il y a plusieurs soufflages, la transition (E) entre deux soufflages successifs ; s'il y a plusieurs récupérations, la transition (G) entre deux récupérations successives et la transition (H) entre la dernière récupération et le dégazage ;
    **en ce que,** pour chaque point sélectionné, on détermine un critère ($|\Delta P|$, $|P'|$) de déclenchement, et une valeur prédéterminée du critère,
    **en ce qu'au** cours d'une phase d'acquisition de données s'étendant sur au moins un cycle de fabrication, on mesure la pression ($Pr_t$) dans le récipient, et dans le ou les réseaux d'air concernés par le ou les points sélectionnés,
    **en ce que,** pour chaque point sélectionné, on détermine à partir des courbes de pressions mesurées :

        - l'instant effectif ($t_e$, $t_g$, $t_h$) correspondant audit point sélectionné (E, G, H),
        - la valeur effective du critère au point sélectionné, et
        - un instant de consigne pour déclencher, dans un cycle de fabrication ultérieur, le passage à la sous-phase postérieure au point caractéristique, tel que :

    si la valeur effective du critère est inférieure ou égale à la valeur prédéterminée, l'instant de consigne est l'instant pour lequel le critère a pris une valeur égale à la valeur prédéterminée, et
    si la valeur effective du critère est strictement supérieure à la valeur prédéterminée, l'instant de consigne est postérieur à l'instant effectif et est déterminé de manière qu'à cet instant le critère prenne une valeur se rapprochant de ou coïncidant avec la valeur prédéterminée.

2. Procédé selon la revendication 1, dans lequel, pour au moins un point caractéristique sélectionné, le critère de déclenchement est la valeur absolue de la différence de pression entre le récipient et le réseau d'air auquel est raccordé le récipient lors de la sous-phase immédiatement avant le point caractéristique, le procédé comprend une étape de mesure, au cours du cycle de fabrication et d'acquisition de données, de la pression dans le réseau d'air auquel est raccordé le récipient avant le point caractéristique sélectionné.

3. Procédé selon la revendication 1 ou 2, dans lequel, pour au moins un point caractéristique sélectionné, le critère de déclenchement est la valeur absolue de la pente de la pression dans le récipient.

4. Procédé selon l'une des revendications précédentes, **dans lequel** on détermine un incrément temporel adapté à l'un des au moins un point caractéristique sélectionné et au critère déterminé **et dans lequel,** si la valeur effective du critère audit point caractéristique sélectionné est supérieure à la valeur prédéterminée, l'instant de consigne pour le cycle de fabrication ultérieur est égal à l'instant effectif pour le cycle venant d'être mesuré, augmenté de l'incrément.

5. Procédé selon l'une des revendications précédentes, **dans lequel,** si la valeur effective du critère à l'un des au moins un point caractéristique sélectionné est supérieure à la valeur prédéterminée, on simule le critère postérieurement à l'instant effectif **et dans lequel** l'instant de consigne pour le cycle de fabrication ultérieur est égal à l'instant pour lequel le critère simulé prend une valeur égale à la valeur prédéterminée.

6. Procédé selon l'une des revendications précédentes, **dans lequel** on détermine un seuil prédéterminé de pression de fin de dégazage et on détermine, à partir des courbes de pressions mesurées, un instant $(t_f)$ effectif de fin de soufflage et la pression dans le récipient juste avant l'ouverture du moule, **et dans lequel** on détermine un instant $(t'_f)$ consigne de fin de soufflage pour un cycle de fabrication ultérieur, lequel instant $(t'_f)$ de consigne est antérieur, égal ou postérieur à l'instant $(t_f)$ effectif de fin de soufflage selon que la pression dans le récipient juste avant l'ouverture du moule est respectivement supérieure, égale ou inférieure au seuil de pression de fin de dégazage.

7. Procédé selon la revendication 6, **dans lequel,** si la pression moyenne dans le récipient dans une période de temps prédéterminée avant l'ouverture du moule est inférieure au seuil de pression de fin de dégazage, on détermine un $(t_k)$ instant cible de dégazage pour lequel la pression mesurée dans le récipient est égale au seuil prédéterminé, **et dans lequel** l'instant $(t'_f)$ consigne de fin de soufflage pour le cycle de fabrication ultérieur est postérieur à l'instant effectif de fin de soufflage d'une durée égale à la durée s'écoulant depuis l'instant $(t_k)$ cible de dégazage jusqu'à l'instant $(t_L)$ d'ouverture effective du moule.

8. Procédé selon la revendication 6 ou 7, dans lequel, si la pression moyenne dans le récipient dans une période de temps prédéterminée avant l'ouverture du moule est supérieure au seuil de pression de dégazage, l'instant $(t'_f)$ consigne de fin de soufflage pour un cycle ultérieur est déterminé, soit en retirant à l'instant $(t_f)$ effectif de fin de soufflage une durée prédéterminée, soit en simulant la pression dans le récipient comme si il n'y avait pas eu d'ouverture de moule, en déterminant un instant cible de dégazage pour lequel la pression simulée est égale au seuil de pression de fin de dégazage, l'instant $(t'_f)$ consigne de fin de soufflage est alors antérieur à l'instant $(t_f)$ effectif de fin de soufflage d'une durée égale à la durée s'écoulant depuis l'instant $(t_L)$ d'ouverture effective de moule jusqu'à l'instant cible de dégazage.

9. Procédé selon l'une des revendications 6 à 8, dans lequel:

   - on détermine une position initiale de début de première récupération et on utilise un seul soufflage à partir du réseau (S2) d'air de pression la plus élevée,
   - puis, quand la pression moyenne dans le réseau (R1) de récupération atteint un seuil prédéterminé, on détermine une position initiale de transition entre l'avant dernier soufflage et le dernier soufflage,
   - puis, on sélectionne les points (E, G) de début de dernier soufflage et de fin de première récupération, et on optimise ces deux points dans un cycle de fabrication ultérieur selon l'une des étapes des revendications 1 à 5,
   - puis, on sélectionne le point (H) de dernière récupération que l'on optimise dans un cycle de fabrication encore ultérieur selon l'une des étapes des revendications 1 à 5,
   - puis, on détermine un instant de fin de dernier soufflage selon l'une des étapes de l'une des revendications 6 à 8.

10. Procédé selon l'une des revendications précédentes, utilisant un carrousel équipé d'une pluralité de stations d'étirage-soufflage, raccordés chacune au différents réseaux (S0, S1, S2, R1, R2) d'air, une partie ou la totalité desdites stations étant des stations de référence, procédé **dans lequel** pour chaque récipient des stations de référence et pour chaque point sélectionné on mesure la pression $\left(\mathrm{Pr}_t^i\right)$ dans le récipient de chacune des stations de référence, et on détermine un instant de consigne correspondant, **dans lequel** pour chaque point sélectionné on analyse la distribution desdits instant de consigne et on détermine, soit un message d'alerte, soit un message de stabilité, soit un instant moyen de consigne pour le point sélectionné, **et dans lequel,** si un instant moyen de consigne est déterminé, on applique ledit instant moyen de consigne dans toutes les stations d'étirage-soufflage, à partir d'un cycle de fabrication ultérieur.

11. Procédé selon l'une des revendications précédentes dans lequel, pour passer d'une sous-phase de la phase de soufflage globale précédant un point caractéristique (E, F, G, H) de pression (Prt), à une sous-phase suivant ledit point caractéristique :

   - on commande la fermeture d'une vanne de raccordement correspondant à la sous-phase qui précède ledit point caractéristique, et
- on commande l'ouverture de la vanne de raccordement correspondant à la sous-phase qui suit le point caractéristique.

12. Procédé selon la revendication 10, dans lequel les consignes temporelles d'actionnement des vannes de raccordement du récipient sont déterminées en tenant compte du temps de réponse desdites vannes pour que la fermeture effective de la vanne à fermer soit antérieure ou coïncide avec l'instant (te) d'ouverture effective de la vanne à ouvrir.

13. Procédé selon l'une des revendications précédentes dans lequel, pour déterminer un point caractéristique (E, F, G, H) de la pression (Prt) dans le récipient en fonction du temps :

   - on applique un filtre numérique à la courbe de pression (Prt) dans le récipient,
   - on détermine une zone temporelle (ze, zf, zg, zh) d'exploration de la courbe où le point caractéristique à déterminer est susceptible de se trouver,
   - on détecte un point anguleux de la courbe dans la zone d'exploration.

**Patentansprüche**

1. Verfahren zur Herstellung von thermoplastischen Behältern durch Streckblasformen, das aus einer Folge von Herstellungszyklen gebildet ist, während jedem von denen ein neuer Behälter hergestellt wird, wobei jeder Herstellungszyklus eine Phase des Vorblasformens aufweist, wo ein Vorformling an ein Luftnetz (S0) zum Vorblasformen derart angeschlossen wird, dass der Vorformling ein Behälter wird, der bereit ist, während einer Gesamtphase des Blasformens blasgeformt zu werden, die nacheinander mindestens die folgenden Unterphasen aufweist:

   ein Blasformen oder eine Abfolge von Blasformungen, wo der Behälter nacheinander an Luftnetze (S1, S2) von zunehmend hohem Druck angeschlossen wird,

   und dann eine Rückgewinnung oder eine Abfolge von Rückgewinnungen, wo der Behälter nacheinander an Rückgewinnungsluftnetze (R1) von zunehmend geringerem Druck angeschlossen wird, bis zur letzten Rückgewinnung, wo der Behälter an ein Luftnetz (R2) angeschlossen wird,
   und dann ein Entgasen, wo der Behälter an den atmosphärischen Druck angeschlossen wird,
   und zuletzt ein Öffnen der Form, umfassend das Abtrennen der Düse,
   **dadurch gekennzeichnet, dass** mindestens ein charakteristischer Punkt des Drucks ($Pr_f$) in dem Behälter ausgewählt wird, der unter den auswählbaren Punkten genommen wird, die, wenn es mehrere Blasformungen gibt, der Übergang (E) zwischen zwei aufeinanderfolgenden Blasformungen, wenn es mehrere Rückgewinnungen gibt, der Übergang (G) zwischen zwei aufeinanderfolgenden Rückgewinnungen und der Übergang (H) zwischen der letzten Rückgewinnung und dem Entgasen sind;
   dadurch, dass für jeden ausgewählten Punkt ein Auslösekriterium ($|\Delta P|$, $|P'|$) und ein vorbestimmter Wert des Kriteriums bestimmt werden, dadurch, dass, während einer Phase des Erfassens von Daten, die sich auf mindestens einen Herstellungszyklus erstreckt, der Druck ($Pr_f$) in dem Behälter und in dem oder den Luftnetzen, die von dem oder den ausgewählten Punkten betroffen sind, gemessen wird, dadurch, dass für jeden ausgewählten Punkt, ausgehend von den gemessenen Druckkurven, Folgendes bestimmt wird:

   - der tatsächliche Augenblick ($t_e$, $t_g$, $t_h$), der dem ausgewählten Punkt (E, G, H) entspricht,
   - der tatsächliche Wert des Kriteriums an dem ausgewählten Punkt und
   - ein Sollzeitpunkt, um in einem weiteren Herstellungszyklus den Übergang zu der Unterphase nach dem charakteristischen Punkt derart auszulösen, dass:

      wenn der tatsächliche Wert des Kriteriums niedriger als der vorbestimmte Wert oder gleich dem vorbestimmten Wert ist, der Sollzeitpunkt der Zeitpunkt ist, für den das Kriterium einen Wert angenommen hat, der gleich dem vorbestimmten Wert ist, und wenn der tatsächliche Wert des Kriteriums deutlich höher als der vorbestimmte Wert ist, der Sollzeitpunkt nach dem tatsächlichen Zeitpunkt liegt und derart bestimmt wird, dass das Kriterium zu diesem Zeitpunkt einen Wert annimmt, der sich dem vorbestimmten Wert annähert oder mit ihm zusammenfällt.

2. Verfahren nach Anspruch 1, wobei für mindestens einen ausgewählten charakteristischen Punkt das Auslösekriterium der Absolutwert der Druckdifferenz zwischen dem Behälter und dem Luftnetz ist, an das der Behälter während der Unterphase unmittelbar vor dem charakteristischen Punkt angeschlossen wird, das Verfahren einen Schritt des Messens während des Zyklus der Herstellung und des Erfassens von Daten des Drucks in dem Luftnetz aufweist, an das der Behälter vor dem ausgewählten charakteristischen Punkt angeschlossen wird.

3. Verfahren nach Anspruch 1 oder 2, wobei für mindestens einen ausgewählten charakteristischen Punkt das Auslösekriterium der Absolutwert des Gefälles des Drucks in dem Behälter ist.

4. Verfahren nach einem der vorhergehenden Ansprüche, wobei ein Zeitinkrement bestimmt wird, das für einen des mindestens einen ausgewählten charakteristischen Punktes und für das vorbestimmte Kriterium geeignet ist, und wobei, wenn der tatsächliche Wert des Kriteriums an dem ausgewählten charakteristischen Punkt höher als der vorbestimmte Wert ist, der Sollzeitpunkt für den weiteren Herstellungszyklus gleich dem Sollzeitpunkt für den Zyklus ist, der soeben gemessen worden ist, der um das Inkrement erhöht wird.

5. Verfahren nach einem der vorhergehenden Ansprüche, wobei, wenn der tatsächliche Wert des Kriteriums bei einem des mindestens einen ausgewählten charakteristischen Punktes höher als der vorbestimmte Wert ist, das Kriterium simuliert wird, das nach dem tatsächlichen Zeitpunkt liegt, und wobei der Sollzeitpunkt für den weiteren Herstellungszyklus gleich dem Zeitpunkt ist, für den das simulierte Kriterium einen Wert annimmt, der gleich dem vorbestimmten Wert ist.

6. Verfahren nach einem der vorhergehenden Ansprüche, wobei ein vorbestimmter Schwellenwert des Drucks am Ende des Entgasens bestimmt wird und ausgehend von den gemessenen Druckkurven ein tatsächlicher ($t_f$) Zeitpunkt des Endes des Blasformens und der Druck in dem Behälter genau vor dem Öffnen der Form bestimmt werden, und wobei ein Sollzeitpunkt ($t'_f$) des Endes des Blasformens für einen weiteren Herstellungszyklus bestimmt wird, wobei der Sollzeitpunkt ($t'_f$) früher, gleichzeitig oder später als der tatsächliche ($t_f$) Zeitpunkt des Endes des Blasformens ist, je nachdem, ob der Druck in dem Behälter kurz vor dem Öffnen der Form jeweils höher, gleich oder niedriger als der Schwellenwert des Drucks am Ende des Entgasens ist.

7. Verfahren nach Anspruch 6, wobei, wenn der mittlere Druck in dem Behälter während einer vorbestimmten Zeitdauer vor dem Öffnen der Form niedriger als der Schwellenwert des Drucks am Ende des Entgasens ist, ein Zielzeitpunkt ($t_k$) des Entgasens bestimmt wird, für den der Druck, der in dem Behälter gemessen wird, gleich dem vorbestimmten Schwellenwert ist, und wobei der Sollzeitpunkt ($t'_f$) des Endes des Blasformens für den weiteren Herstellungszyklus später als der tatsächliche Zeitpunkt des Endes des Blasformens um eine Zeitdauer, die gleich der Zeitdauer ist, die ab dem Zielzeitpunkt ($t_k$) des Entgasens bis zum Zeitpunkt ($t_L$) des tatsächlichen Öffnens der Form abläuft, ist.

8. Verfahren nach Anspruch 6 oder 7, wobei, wenn der mittlere Druck in dem Behälter während einer vorbestimmten Zeitdauer vor dem Öffnen der Form höher als der Schwellenwert des Drucks des Entgasens ist, der Sollzeitpunkt ($t'_f$) des Endes des Blasformens für den weiteren Zyklus bestimmt wird, indem entweder vom tatsächlichen ($t_f$) Zeitpunkt des Endes des Blasformens eine vorbestimmte Zeitdauer abgezogen wird, oder indem der Druck in dem Behälter simuliert wird, als ob kein Öffnen der Form stattgefunden hätte, indem ein Zielzeitpunkt des Entgasens bestimmt wird, für den der simulierte Druck gleich dem Schwellenwert des Drucks am Ende des Entgasens ist, der Sollzeitpunkt ($t'_f$) des Endes des Blasformens dann früher als der tatsächliche ($t_f$) Zeitpunkt des Endes des Blasformens um eine Zeitdauer, die gleich der Zeitdauer ist, die ab dem Zeitpunkt ($t_L$) des tatsächlichen Öffnens der Form bis zum Zielzeitpunkt des Entgasens abläuft, ist.

9. Verfahren nach einem der Ansprüche 6 bis 8, wobei:

   - eine Ausgangsposition des Beginns der ersten Rückgewinnung bestimmt wird und ein einziges Blasformen ausgehend von dem Luftnetz (S2) mit dem höchsten Druck verwendet wird
   - und dann, wenn der mittlere Druck in dem Netz (R1) zur Rückgewinnung einen vorbestimmten Schwellenwert erreicht, eine Ausgangsposition des Übergangs zwischen dem vorletzten Blasformen und dem letzten Blasformen bestimmt wird
   - und dann die Punkte (E, G) des Beginns des letzten Blasformens und des Endes der ersten Rückgewinnung ausgewählt werden, und diese zwei Punkte in einem weiteren Herstellungszyklus nach einem der Schritte der Ansprüche 1 bis 5 optimiert werden
   - und dann der Punkt (H) der letzten Rückgewinnung ausgewählt wird, der in einem noch weiteren Herstellungszyklus nach einem der Schritte der Ansprüche 1 bis 5 optimiert wird,
   - und dann ein Zeitpunkt des Endes des letzten Blasformens nach einem der Schritte von einem der Ansprüche 6 bis 8 bestimmt wird.

10. Verfahren nach einem der vorhergehenden Ansprüche, das ein Karussell verwendet, das mit mehreren Streckblasformstationen ausgestattet ist, die jeweils an verschiedene Luftnetze (S0 S1, S2, R1, R2) angeschlossen sind, wobei ein Teil oder die Gesamtheit der Stationen Referenzstationen sind, Verfahren, wobei für jeden Behälter der Referenzstationen und für jeden ausgewählten Punkt der Druck ($Pr_t^i$) in dem Behälter von jeder der Referenzstationen gemessen wird und ein entsprechender Sollzeitpunkt bestimmt wird, wobei für jeden ausgewählten Punkt die Verteilung der Sollzeitpunkte analysiert wird und sowohl eine Warnmeldung als auch eine Stabilitätsmeldung als auch ein durchschnittlicher Sollzeitpunkt für den ausgewählten Punkt bestimmt wird und wobei, wenn ein durchschnittlicher Sollzeitpunkt bestimmt wird, der durchschnittliche Sollzeitpunkt in allen Streckblasformstationen ab einem weiteren Herstellungszyklus angewendet wird.

11. Verfahren nach einem der vorhergehenden Ansprüche, wobei, um von einer Unterphase der Gesamtphase des Blasformens, die einem charakteristischen Punkt (E, F, G, H) des Drucks (Prt) vorausgeht, zu einer Unterphase überzugehen, die dem charakteristischen Punkt folgt:

- das Schließen eines Anschlussventils, das der Unterphase entspricht, die dem charakteristischen Punkt vorausgeht, gesteuert wird und
- das Öffnen des Anschlussventils, das der Unterphase entspricht, die dem charakteristischen Punkt folgt, gesteuert wird.

12. Verfahren nach Anspruch 10, wobei die zeitlichen Sollwerte zum Betätigen der Anschlussventile des Behälters bestimmt werden, indem die Antwortzeit der Ventile berücksichtigt wird, damit das tatsächliche Schließen des zu schließenden Ventils vor dem Zeitpunkt (te) des tatsächlichen Öffnens des zu öffnenden Ventils liegt oder mit diesem zusammenfällt.

13. Verfahren nach einem der vorhergehenden Ansprüche, wobei, um einen charakteristischen Punkt (E, F, G, H) des Drucks (Prt) in dem Behälter in Abhängigkeit von der Zeit zu bestimmen:

- ein digitaler Filter auf die Druckkurve (Prt) in dem Behälter angewendet wird,
- ein Zeitbereich (ze, zf, zg, zh) zum Abtasten der Kurve bestimmt wird, in der sich der zu bestimmende charakteristische Punkt befinden könnte,
- ein Winkelpunkt der Kurve in dem Bereich zum Abtasten erfasst wird.

**Claims**

1. Method for manufacturing thermoplastic containers by drawing and blow-forming consisting of a succession of manufacturing cycles, during each of which a new container is manufactured, each manufacturing cycle comprising a pre-blow-forming phase in which a preform is connected to a pre-blow-forming air network (S0) so that the preform becomes a container ready to be blow-formed in a global blow-forming phase which comprises, in succession at least the following sub-phases:

a blow-forming or a succession of blow-formings in which the container is connected, in succession, to air networks (S1, S2) of increasingly higher pressure,

then a recovery or a succession of recoveries in which the container is connected, in succession, to recovery air networks (R1) of increasingly lower pressure, until the last recovery in which the container is connected to an air network (R2), then a gas purging in which the container is connected to atmospheric pressure, and finally an opening of the mould comprising the disconnection of the nozzle, **characterized in that** there is selected at least one point characteristic of the pressure ($Pr_t$) in the container taken from the points that can be selected that are, if there are several blow-formings, the transition (E) between two successive blow-mouldings; if there are several recoveries, the transition (G) between two successive recoveries and the transition (H) between the last recovery and the gas purging; **in that,** for each point selected, a triggering criterion ($|\Delta P|$, $|P'|$), and a predetermined value of the criterion, are determined, **in that** during a data acquisition phase extending over at least one manufacturing cycle, the pressure ($Pr_t$) in the container, and in the air network or networks affected by the selected point or points, is measured, **in that,** for each point selected, there are determined, from the measured pressure curves:

- the actual instant ($t_e$, $t_g$, $t_h$) corresponding to said points selected (E, G, H),
- the actual value of the criterion at the point selected, and
- a setpoint instant for triggering, in a subsequent manufacturing cycle, the transition to the sub-phase following the characteristic point, such that:

if the actual value of the criterion is less than or equal to the predetermined value, the setpoint instant is the instant for which the criterion has taken a value equal to the predetermined value, and if the actual value of the criterion is strictly greater than the predetermined value, the setpoint instant is after the actual instant and is determined such that at this instant, the criterion takes a value approximating to or coinciding with the predetermined value.

2. Method according to Claim 1, in which, for at least one characteristic point selected, the triggering criterion is the absolute value of the pressure difference between the container and the air network to which the container is connected in the sub-phase immediately before the characteristic point, the method comprises a step of measurement during the manufacturing and data acquisition cycle, the pressure in the air network to which the container is connected before the characteristic point selected.

3. Method according to Claim 1 or 2, in which, for at least one characteristic point selected, the triggering criterion is the absolute value of the slope of the pressure in the container.

4. Method according to one of the preceding claims **in which** a time increment is determined that is adapted to one of the at least one characteristic points selected and to the determined criterion **and in which,** if the actual value of the criterion at said characteristic point selected is greater than the predetermined value, the setpoint instant for the subsequent manufacturing cycle is equal to the actual instant for the cycle that has just been measured, increased by the increment.

5. Method according to one of the preceding claims, **in which,** if the actual value of the criterion at one of the at least one characteristic points selected is greater than the predetermined value, the criterion is simulated after the actual instant **and in which** the setpoint instant for the subsequent manufacturing cycle is equal to the instant for which the simulated criterion takes a value equal to the predetermined value.

6. Method according to one of the preceding claims, **in which** a predetermined end-of-gas-purging pressure threshold is determined and, from the measured pressure curves, an actual end-of-blow-forming instant ($t_f$) and the pressure in the container just before the opening of the mould are determined, **and in which** an end-of-blow-forming setpoint instant ($t'_f$) is determined for a subsequent manufacturing cycle, which setpoint instant ($t'_f$) is before, equal to or after the actual end-of-blow-forming instant ($t_f$) depending on whether the pressure in the container just before the opening of the mould is respectively above, equal to or below the end-of-gas-purging pressure threshold.

7. Method according to Claim 6, **in which,** if the average pressure in the container in a predetermined period of time before the opening of the mould is below the end-of-gas-purging pressure threshold a target gas-purging instant ($t_k$) is determined for which the pressure measured in the container is equal to the predetermined threshold, **and in which** the end-of-blow-forming setpoint instant ($t'_f$) for the subsequent manufacturing cycle is after the actual end-of-blow-forming instant by a duration equal to the duration elapsing from the target gas-purging instant ($t_k$) to the instant ($t_L$) of actual opening of the mould.

8. Method according to Claim 6 or 7, in which, if the average pressure in the container in a predetermined period of time before the opening of the mould is above the gas-purging pressure threshold, the end-of-blow-forming setpoint instant ($t'_f$) for a subsequent cycle is determined,
either by subtracting a predetermined duration from the actual end-of-blow-forming instant ($t_f$),
or by simulating the pressure in the container as if there had been no opening of the mould, by determining a target gas-purging instant for which the simulated pressure is equal to the end-of-gas-purging pressure threshold, the end-of-blow-forming setpoint instant ($t'_f$) is then before the actual end-of-blow-forming instant ($t_f$) by a duration equal to the duration elapsing from the instant ($t_L$) of actual opening of the mould to the target gas-purging instant.

9. Method according to one of Claims 6 to 8, in which:

    - an initial first recovery start position is determined and a single blow-forming from the air network (S2) of highest pressure is used,
    - then, when the average pressure in the recovery network (R1) reaches a predetermined threshold, an initial position of transition between the penultimate blow-forming and the last blow-forming is determined,
    - then, the last blow-forming start and first recovery end points (E, G) are selected, and these two points are optimized in a subsequent manufacturing cycle according to one of the steps of Claims 1 to 5,
    - then, the last recovery point (H) that is optimized in an even later manufacturing cycle according to one of the steps of Claims 1 to 5 is selected,
    - then, a last blow-moulding end instant is determined according to one of the steps of one of Claims 6 to 8.

10. Method according to one of the preceding claims, using a carousel equipped with a plurality of drawing and blow-forming stations, each connected to the different air networks (S0, S1, S2, R1, R2), some or all of said stations being reference stations, method **in which,** for each container of the reference stations and for each point selected, the pressure ($Pr_i^i$) in the container of each of the reference stations is measured, and a corresponding setpoint instant is determined, **in which,** for each point selected, the distribution of said setpoint instants is analysed and an alert message or a stability message or an average setpoint instant is determined for the point selected, **and in which,** if an average setpoint instant is determined, said average setpoint instant is applied in all the drawing and blow-forming stations, from a subsequent manufacturing cycle.

11. Method according to one of the preceding claims, in which, to go from a sub-phase of the global blow-forming phase preceding a characteristic point (E, F, G, H) of pressure (Prt), to a sub-phase following said characteristic point:

> - the closure of a connecting valve corresponding to the sub-phase preceding said characteristic point is commanded, and
> - the opening of the connecting valve corresponding to the sub-phase which follows the characteristic point is commanded.

12. Method according to Claim 10, in which the time setpoints for actuation of the container connecting valves are determined by taking into account the response time of said valves for the actual closure of the valve to be closed to be before or coincide with the instant (te) of actual opening of the valve to be opened.

13. Method according to one of the preceding claims, in which, to determine a characteristic point (E, F, G, H) of the pressure (Prt) in the container as a function of time:

> - a numerical filter is applied to the pressure curve (Prt) in the container,
> - a time zone (ze, zf, zg, zh) for exploration of the curve where the characteristic point to be determined is likely to be located is determined,
> - an angular point of the curve is detected in the exploration zone.

FIG. 1

$P_r(t)$ (MPa)

$t$(ms)

A B C D E F G H

S0 S1 S2 R1 R2

$t_a$ $t_b$ $t_c$ $t_d$ $t_e$ $t_f$ $t_g$ $t_h$ $t_L$

FIG. 2

FIG. 3

FIG. 4

FIG. 5

FIG. 6

FIG. 7

**EP 2 911 860 B1**

## RÉFÉRENCES CITÉES DANS LA DESCRIPTION

**Documents brevets cités dans la description**

- EP 1905569 A